(19) **Europäisches Patentamt**

**European Patent Office**

**Office européen des brevets**

(11) Veröffentlichungsnummer : **0 503 677 A2**

(12) **EUROPÄISCHE PATENTANMELDUNG**

(21) Anmeldenummer : **92104496.2**

(22) Anmeldetag : **15.03.92**

(51) Int. Cl.$^5$ : **F16B 13/06**

(30) Priorität : **14.03.91 DE 4108198**

(43) Veröffentlichungstag der Anmeldung :
**16.09.92 Patentblatt 92/38**

(84) Benannte Vertragsstaaten :
**AT BE CH DE DK ES FR GB GR IT LI LU NL SE**

(71) Anmelder : **MÄCHTLE GmbH**
**Dieselstrasse 19**
**W-7143 Vaihingen/Enz (DE)**

(72) Erfinder : **Mächtle, Daniel**
**Waldstrasse 16**
**W-7015 Korntal-Münchingen 1 (DE)**

(74) Vertreter : **Raeck, Wilfrid, Dipl.-Ing.**
**Moserstrasse 8**
**W-7000 Stuttgart 1 (DE)**

(54) **Schwerlastanker.**

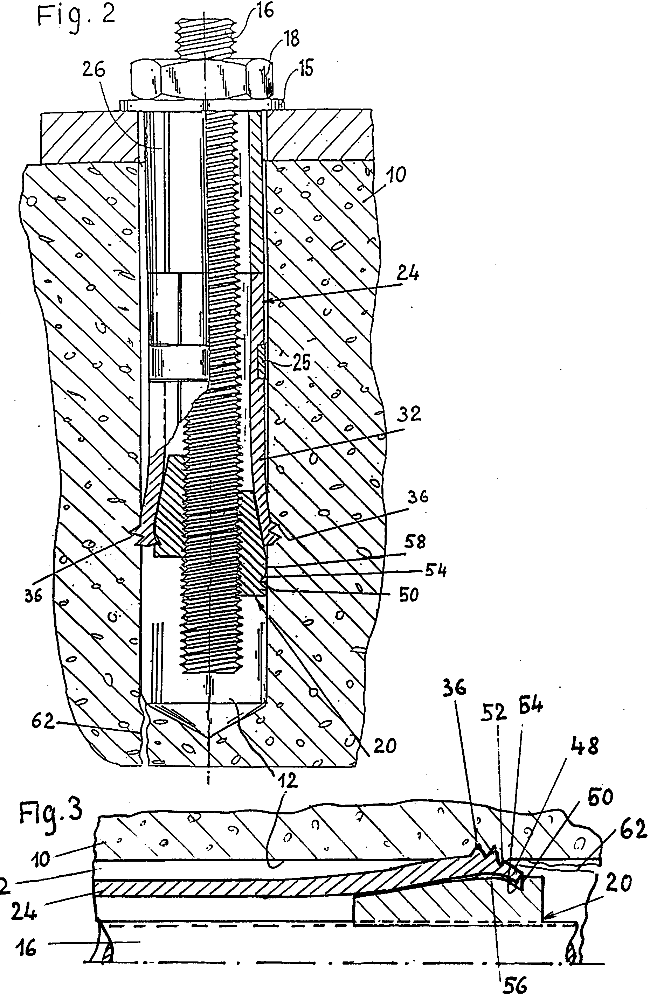

(57)   Schwerlastanker zur Befestigung einer Gewindestange (16) in einer Wand, mit einer längsgeschlitzten Spreizhülse (24), die am vorderen Ende äußere Vorsprünge (36) als Zacken oder ringförmige Erhebungen wie bei einem Gewinde trägt, und einer auf die Gewindestange (16) aufgeschraubten Konusmutter (20), deren größter Durchmesser etwa der Wandbohrung entspricht. Konuswinkel und Länge der Konusmutter (20) sind so bemessen, daß bei erstmals gesetztem Anker und dabei formschlüssig in die Bohrlochwand eingegrabenen Vorsprüngen (36) eine freie Konuslänge als Spreizreserve nach vorn aus der Spreizhülse (24) herausragt. Bei späterer Bohrlocherweiterung gleitet die Konusmutter über einen an das weiteste Konusende anschließenden Zylinderteil (58), der eine zylindrische oder ballige Auflage (58 bzw. 56) für den die Vorsprünge (36) tragenden Hülsenbereich sowie eine Eindrehung (54) aufweist, die einen dem Konus entgegengesetzt geneigten Umlenkbereich für das elastisch kontraktierende vordere Ende der Spreizhülse (24) sowie eine radiale Anschlagschulter (50) bildet (Fig. 2).

Fig. 2

EP 0 503 677 A2

Die Erfindung betrifft einen Schwerlastanker zur Befestigung einer Gewindestange in einem Bohrloch einer Bauwerkwand, mit einer über eine vordere Länge längsgeschlitzten Spreizhülse, die in einem Abstand zum vorderen Ende wenigstens einen inneren Vorsprung aufweist, und mit einer von vorn in die Spreizhülse einziehbaren, auf die Gewindestange aufgeschraubten Konusmutter, deren größter Durchmesser etwa dem des Bohrloches entspricht.

Es sind metallische Spreizdübel bekannt - nachfolgend im Hinblick auf ihr Einsatzgebiet Schwerlastanker genannt - deren Spreizhülse durch Aufweitung im Bohrloch mit Reibschluß festgehalten wird und dadurch die in die vorangehende Konusmutter eingeschraubte lasttragende Gewindestange verankert. Beim Setzen des Ankers drückt die auf der unter Zugspannung gesetzten Gewindestange gehaltene Konusmutter die Lamellen der Spreizhülse auswärts gegen die Bohrlochwandung. Wenn sich das Bohrloch aufgrund nachträglich entstehender Linien- oder Kreuzrisse erweitert und dadurch der Spreizdruck nachläßt, besteht die Gefahr, daß die auf die Gewindestange wirkende Zuglast entweder den gelockerten Anker aus dem Bohrloch herauszieht oder die Konusmutter durch die sich nunmehr zusätzlich aufweitende Spreizhülse hindurchzieht. Vorwiegend tritt der letztgenannte Vorgang ein, da die äußere Reibung zwischen Spreizhülse und Bohrloch größer ist als die innere zwischen Spreizhülse und Konusmutter.

Bei Verankerungen mit Hinterschnitt ist diese Gefahr dadurch beseitigt, daß äußere Vorsprünge oder nach außen umklappbare Abschnitte am vorderen Ende der Spreizhülse beim Anziehen der Konusmutter in eine zuvor in der Tiefe des Bohrloches hergestellte Hinterschnittkaverne bewegt, also ohne Ausübung von Spreizdruck auf die Bohrlochwandung aufgeweitet werden und einen Formschluß herstellen. Da ein in der Tiefe stufenartig erweitertes Bohrloch sich aber nur mit zusätzlichem Aufwand und Spezialwerkzeugen herstellen läßt, kommen formschlüssige Verankerugnen nur bei hohen Sicherheitsanforderungen zur Anwendung.

Der Erfindung liegt die Aufgabe zugrunde, einen Schwerlastanker anzugeben, der innerhalb einer üblichen Wandbohrung auch nach einer z.B. durch Linien- oder Kreuzrisse später entstehenden Bohrlocherweiterung in der Lage ist, entweder selbsttätig durch Ausnutzung der an der Gewindestange wirksamen Zugvorspannung oder auch durch zusätzliches Nachspannen der Konusmutter, die Verankerung unter den nachträglich veränderten Bohrlochverhältnissen mit Sicherheit aufrechtzuerhalten.

Gemäß einer ersten Ausführungsform der Erfindung wird diese Aufgabe bei einem Schwerlastanker der eingangs angegebenen Art durch folgende Merkmale gelöst:

– die Spreizhülse trägt am vorderen Ende über dem Hülsenumfang vorstehende äußere Vorsprünge in Form von Zacken oder ringförmigen Erhebungen wie bei einem Gewinde,

– Konuswinkel und Länge der Konusmutter sind so bemessen, daß bei mit vorbestimmtem Spreizdruck erstmals gesetztem Anker und bei formschlüssig in der Bohrlochwand eingegrabenen Vorsprüngen eine freie Konuslänge als Spreizreserve nach vorn aus der Spreizhülse herausragt,

– der innere Vorsprung, dessen Abstand vom vorderen Ende der Spreizhülse der Länge der Konusmutter entspricht, ist als nach vorn gerichtete Ringschulter ausgebildet, um Einzugsbewegungen der Konusmutter aufgrund nachträglicher Bohrlocherweitung beim maximal aufgeweiteter Spreizhülse zu begrenzen.

Bei dieser Bauform wird eine beim Setzen des Ankers verbleibende Spreizreserve durch geeignete Abstimmung zwischen den Maßen der Konusmutter, der Wandstärke und der äußeren Vorsprünge der Spreizhülse erzeugt, so daß nach Aufbringen der vorbestimmten Anzugskraft mit Hilfe eines Drehmomentschlüssels die Konusmutter noch mit einer freien Länge aus der über die Vorsprünge fest verankerten Spreizhülse herausragt. Im Fall einer späteren unbeabsichtigten Bohrlocherweiterung durch nachgebendes Mauerwerk bleibt eine gesicherte Verankerung aufrechterhalten, weil die unter der Vorspannung der Gewindestange stehende Konusmutter in die nunmehr weiter aufspreizbare Spreizhülse hineingezogen wird, bis sie gegebenenfalls an deren inneren Ringschulter anliegt und die Spreizreserve aufgebraucht ist. In diesem Zustand sind die Lamellen durch die Konusmutter weiter gespreizt worden, so daß die äußeren Vorsprünge an den vorderen Lamellenbereichen trotz der Bohrlocherweiterung eingegraben und sicher verankert bleiben, und die innere Ringschulter verhindert, daß die Gewindestange mit der an ihr wirkenden Zuglast durch die Spreizhülse herausgezogen wird. Die äußeren Vorsprünge an den Lamellen, die sich schon beim Setzen des Ankers in der Bohrlochwandung eingegraben haben, verbleiben auch bei erweitertem Bohrloch somit vorteilhaft an der gleichen Eingrabstelle. Somit bleibt die an der Wand verankerte Vorrichtung oder Tragkonstruktion auch bei nachgespreiztem Schwerlastanker, nunmehr durch Formschluß, gesichert.

Die über den Umfang der Spreizhülse an deren vorderem Ende vorstehenden äußeren Vorsprünge können z.B. durch Kaltschlagen oder andere Verformungsverfahren angeformt werden. Sie lassen sich auch dadurch erzeugen, daß die Spreizhülse an ihrem Außenumfang eine Ausnehmung enthält, die von den vorderen Vorsprüngen ausgeht und sich mindestens über die geschlitzte Hülsenlänge erstreckt.

Zweckmäßig ist die Ringschulter in solcher Entfernung vom vorderen Ende der Spreizhülse angeordnet, daß sich die Konusmutter in ihrer Endlage auf ihrer gesamten Länge innerhalb der Spreizhülse befindet und deren Vorsprünge durch Bereiche des größten Durchmessers der Konusmutter unterstützt sind. Die Spreiz-

EP 0 503 677 A2

hülse kann aus einem Drehteil bestehen, aus dem zusätzlich zur äußeren Ausnehmung wenigstens eine sich bis zur inneren Ringschulter erstreckende erweiterte Innenbohrung herausgearbeitet sind. Da die Länge der Spreizhülse gemäß der Erfindung mindestens ungefähr der anderthalbfachen bis zweifachen Konuslänge der Konusmutter entspricht, kann die Spreizhülse mit wenig Aufwand aus einem relativ kurzen Drehteil gefertigt werden. Die in ihrem vorderen geschlitzten Bereich gebildeten Spreizzungen oder Lamellen können eine verhältnismäßig geringe Wandstärke aufweisen, da die Verankerung im Bohrloch überwiegend mit Hilfe der sich in die Bohrlochwandung eingrabenden Vorsprünge erfolgt. Aufgrund der durch die äußere Ausnehmung und durch die bis zur Ringschulter herausgearbeitete Innenbohrung geschwächten Wandstärke sind die Lamellen leicht spreizbar, während am vorderen Ende der Spreizhülse aufgrund der Vorsprünge ein verdickter Abschnitt verbleibt, der sich beim Setzen des Ankers bzw. beim ersten Einziehen der Konusmutter schnell in die Bohrlochwand eingräbt.

Eine zweite bevorzugte Ausführungsform des Schwerlastankers nach der Erfindung, der im Unterschied zur vorangehend beschriebenen Ausführungsform mit einer Spreizhülse ohne innere Ringschulter arbeitet, ist durch folgende Merkmale gekennzeichnet:

– die Spreizhülse trägt am vorderen Ende über den Hülsenumfang vorstehende äußere Vorsprünge in Form von Zacken oder ringförmigen Erhebungen wie bei einem Gewinde,

– Konuswinkel und Länge der Konusmutter sind so bemessen, daß bei mit vorbestimmtem Spreizdruck erstmals gesetztem Anker und beim formschlüssig in die Bohrlochwand eingegrabenen Vorsprüngen eine verbleibende freie Konuslänge als Spreizreserve nach vorn aus der Spreizhülse herausragt,

– die Konusmutter ist durch einen sich an das etwa dem Bohrlochdurchmesser entsprechende, erweiterte Ende des Konus anschließenden Zylinderteil verlängert, auf dem für den Fall von Einzugsbewegungen der Konusmutter aufgrund nachträglicher Bohrlocherweiterungen mittels einer Eindrehung oder Ringnut nacheinander ein rückwärtiger Abstützbereich für die Vorsprünge der Spreizhülse, ein bezüglich des Konus entgegengesetzt geneigter Umlenkbereich für das elastisch kontraktierende vordere Ende der Spreizhülse sowie eine radiale Anschlagschulter am vorderen Ende der Eindrehung vorgesehen sind.

Die beim Setzen des Ankers aus der Spreizhülse nach vorn herausragende freie Konuslänge als Spreizreserve entsteht bei dieser baulich vereinfachten Variante wie bei der ersten Ausführungsform, jedoch wird im Unterschied dazu die nach einer unbeabsichtigten Bohrlocherweiterung angestrebte, letztlich formschlüssige Verankerung dadurch erreicht, daß die vorderen Lamellenenden der fest verankerten Spreizhülse über ihren mit elastischer Formänderung vorsichgehenden Zustand der weitesten Spreizung hinaus das Bestreben haben, wenigstens teilweise in die ursprüngliche Form zurückzukehren. Dadurch folgen sie der Außenform der an ihnen vorbeigleitenden Konusmutter und kontraktieren in den Umlenkbereich der Eindrehung, bis sie an die Ringschulter der Konusmutter anstoßen. Auf ihrem Weg dorthin über die Außenfläche der verlängerten Konusmutter werden sie radial einwärts umgelenkt oder umgeknickt, und somit wird die Konusmutter formschlüssig arretiert. Die eingetretene Durchmesservergrößerung der Spreizhülse sorgt dafür, daß im erweiterten Bohrloch bei aufrechterhaltenem Spreizdruck die Vorsprünge der Lamellen in der Bohrlochwand eingegraen bleiben. Dieser nachträgliche Verankerungsvorgang ist um so wirksamer, je besser die aus der Zugvorspannung der Gewindestange resultierende Kraft von der glattwandigen, z.B. polierten Konusmutter übertragen wird.

Es kann zweckmäßig sein, zwischen dem vorderen Ende der Lamellen und ihren äußeren Vorsprüngen einen freien Endabschnitt eventuell geringer Materialstärke vorzusehen, damit die Lamellen während ihrer Relativbewegung dem Außenprofil der verlängerten Konusmutter eng folgen und sich bis zur Anlage an der Ringschulter vorn einwärts biegen. Diesem Ziel kann zusätzlich eine über den Lamellenumfang verlaufende Knickschwächungslinie oder -rille dienen.

Diese zweite Variante zeichnet sich vor allem durch ihre bauliche Einfachheit aus. Die Spreizhülse erfordert lediglich die vorderen, über ihren Außenumfang vorstehenden Vorsprünge, die wie zuvor durch Kaltschlagen angeformt oder nach äußerem Abdrehen eines entsprechend größer bemessenen Rohr-Ausgangsmaterials hergestellt werden können. Bei angeformten Vorsprüngen kann die Spreizhülse auch aus einzelnen Hülsensegmenten oder -schalen bestehen, die mittels einer Ringfeder zusammengehalten sind. Die durch den Zylinderteil verlängerte Konusmutter bildet ein einfaches Drehteil, auf dem zusätzlich zum Konus lediglich der Zylinderteil mit einer Eindrehung vorgesehen ist, um den Umlenkbereich und die radiale Anschlagschulter zu erzeugen.

In Ausgestaltung der zweiten Variante kann vor der Ringschulter der Konusmutter ein Abschnitt mit entgegengesetzter Konusneigung und mit balligem Scheitel vorgesehen sein, wobei der Scheitel sich am erweiterten Ende des Konus befindet. Auf diese Weise wird beim Aufbrauch der Spreizreserve das Einstülpen oder Kontraktieren des vorderen Endes der Lamellen zusätzlich begünstigt. Die mit den äußeren Vorsprüngen besetzten Bereiche der Lamellen sind dann durch den balligen Scheitel oder einen vergleichbar wirkenden Abschnitt der Konusmutter unterstützt. Weiterhin können Maßnahmen vorgesehen sein, mit deren Hilfe die

3

äußeren Vorsprünge der Spreizhülse durch den Aufbrauch der Spreizreserve eine rückwärts gerichtete Eingrabrichtung in die Bohrlochwandung erreichen, um so den Auszugskräften optimal entgegenzuwirken. Dies erfolgt beispielsweise durch einen sorgfältig bemessenen Abstand der Vorsprünge vom vorderen Hülsenende.

Die Lamellen der Spreizhülse können vor den äußeren Vorsprüngen einen kurzen freien Endabschnitt aufweisen, der dem Umlenkbereich auf der Konusmutter zugeordnet ist. Wenn dieser Endabschnitt nach elastischer Kontraktion an der Ringschulter anliegt und gegebenenfalls von dem sich rückwärts anschließenden, die Vorsprünge tragenden Abschnitt durch eine Knickschwächungsrille oberflächlich getrennt ist, bäumt er sich auf und übt bei fortgesetzter Einzugsbewegung der Konusmutter auf die die Vorsprünge tragenden Lamellenbereiche eine zusätzliche Spreizwirkung aus, die dazu beiträgt, die formschlüssige Verankerung der Vorsprünge in der Bohrlochwand zu verstärken. Die äußeren Vorsprünge der Spreizhülse können aus zwei oder drei axial hintereinander angeordneten ringförmigen Zacken oder Zackenfolgen bestehen.

Da der Schwerlastanker nur an seinem vorangehenden Ende in der Tiefe des Bohrloches fest verspannt bzw. gehalten ist, kann seine Gewindestange bei dynamischer Belastung mit Querzug-Kräften wackeln, so daß dort das Mauerwerk bzw. der Beton allmählich ausbricht. Um dem entgegenzuwirken, kann innerhalb des Abstandes zwischen dem rückwärtigen Ende der Spreizhülse und dem Bohrlocheingang eine vorzugsweise gerollte, einen Längsschlitz enthaltende Hülse mit federndem Aufweiteffekt angeordnet werden, die nach ihrem Einschlagen eine verbleibende Spreizkraft besitzt.

Weitere Merkmale und Vorteile der Erfindung ergeben sich aus der Beschreibung von Ausführungsbeispielen anhand der Zeichnungen. Sämtliche Merkmale, insbesondere die der Ansprüche können auch in anderen unterschiedlichen Kombinationen weitere Ausführungsformen der Erfindung verkörpern. Es zeigen, jeweils schematisch,

Fig. 1 einen Längsschnitt durch eine erste Ausführungsform des Schwerlastankers nach der Erfindung in einer Wandbohrung im Zustand nach dem ersten Setzen sowie, links der Längsmittellinie, im Zustand nach Aufbrauch der Spreizreserve,

Fig. 2 einen Längsschnitt durch eine zweite Ausführungsform des Schwerlastankers nach der Erfindung in einer Wandbohrung im Zustand nach dem ersten Setzen sowie, links der Längsmittellinie, im Zustand nach Aufbrauch der Spreizreserve, und

Fig. 3 einen vergrößerten Teilschnitt einer abgeänderten Konusmutter des Ankers nach Fig. 2.

Zur Befestigung eines Bauteils 14 an einer Bauwerkwand 10 ist in ein Bohrloch 12 ein Schwerlastanker gemäß der Erfindung eingesetzt. Der Schwerlastanker besteht aus einer sich durch das Bauteil 14 erstreckenden Gewindestange 16, einer Sechskantmutter 18, einer Distanzhülse 26, einer Spreizhülse 24 und einer Konusmutter 20, die beim Setzen des Ankers mit einem Teil ihres Umfanges 22 in die Spreizhülse hineinreagt. Die aus einem Drehteil bestehende Spreizhülse 24 enthält eine ausgedrehte äußere Ausnehmung 28 und ist auf einer geeigneten Länge mit vom vorderen Ende ausgehenden Längsschlitzen 30 versehen, so daß aufspreizbare Lamellen 32 entstehen. Am rückwärtigen Ende kann die Spreizhülse 24 eine erweiterte Bohrung 40 enthalten, so daß an der Stelle 42 ein geschwächter Querschnitt als elastische Zone entsteht, in der sich die Spreizhülse beim Setzen des Ankers verformt, so daß die Gewindespindel 16 unter eine erhöhte Zugvorspannung gesetzt werden kann. Die äußere Ausnehmung 28 endet vor dem vorderen Ende der Lamellen, so daß ein im Querschnitt verdickter vorderer Lamellenabschnitt entsteht, aus dem äußere radiale Vorsprünge 36 in Form von zacken oder ringförmigen spitzen Erhebungen nach Art eines Gewindes ausgedreht und spanlos geformt sind.

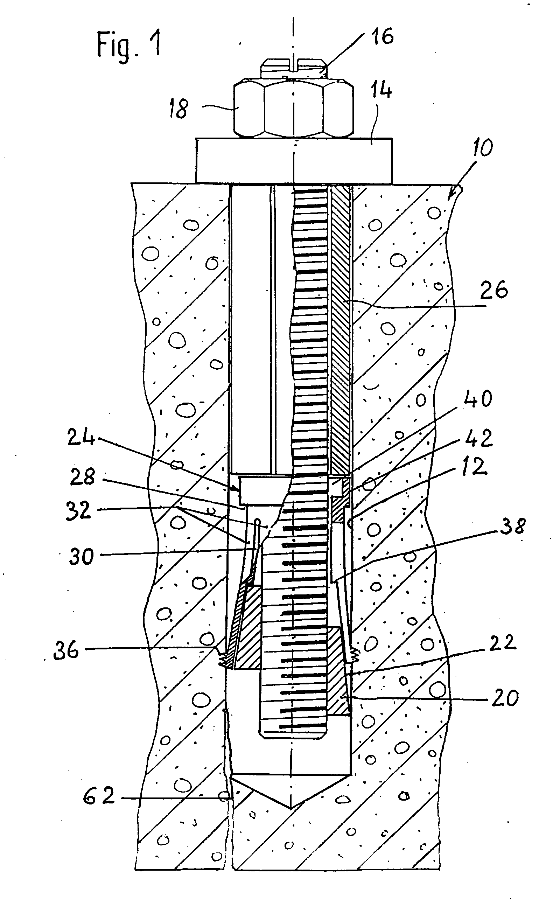

In der Darstellung nach Fig. 1 ist rechts von der Längsmittellinie der Schwerlastanker im erstmals gesetzten Zustand eingezeichnet. Dabei ist die auf die Gewindespindel 16 aufgeschraubte Konusmutter 20 mit einem Teil ihres Konus 22 in die Spreizhülse 24 soweit hineingezogen, daß die gespreizten Lamellen 32 sich mit ihren Vorsprüngen 36 in die Bohrlochwand eingegraben haben. Der nach vorn aus der Spreizhülse herausragende Abschnitt der Konusmutter 20 bildet die sogenannte Spreizreserve.

Sollte sich das Bohrloch 12 zu einem späteren Zeitpunkt z.B. aufgrund eines Linienrisses oder Kreuzrisse 62 erweitern, wird aufgrund der verfügbaren Spreizreserve die Konusmutter 20 von der unter Zugspannung stehenden Gewindespindel 16 weiter in die Spreizhülse 24 hineingezogen, bis sie in dem links von der Längsmittellinie in Fig. 1 eingezeichneten Zustand an einer inneren Ringschulter der Spreizhülse 24 anliegt. Beim Hineinziehen der Konusmutter 20 in die Spreizhülse folgen die Lamellen der Bohrungserweiterung und halten mit der Bohrungswandung sowohl den Reibschluß als auch den über die radialen Vorsprünge 36 erzeugten Formschluß aufrecht.

Beim Ausführungsbeispiel gemäß Fig. 2 ist der Gegenstand 14 mittels eines eines Schwerlastankers in Durchsteckmontage an einer Bauwerkwand 10 verankert. Die Spreizhülse 24, die wie in Fig. 1 als Drehteil ausgeführt sein kann, besteht hier aus mehreren segmentförmigen Schalen, die durch eine oder mehrere Ringfedern 25 zusammengehalten sind. Das vordere Ende der Lamellen 32 vor den wie in Fig. 1 vorgesehenen äußeren Vorsprüngen 36 kann aus einem glattwandigen Endabschnitt 48 bestehen.

In Fig. 2 ist rechts von der Längsmittellinie der Schwerlastanker im erstmals gesetzten Zustand gezeigt, während links davon der Zustand nach Aufbrauch der Spreizreserve dargestellt ist. Die bei Bohrlocherweiterung z.B. aufgrund nachträglich auftretender Längsrisse 62 neu einsetzende Einzugsbewegung der Konusmutter 20 in die Spreizhülse 24 verursacht zunächst deren maximale Aufweitung am Scheitel des Konus und wird anschließend durch Anlage des elastisch kontrahierenden vorderen Endes der Spreizhülse an einer Ringschulter 50 im vorderen Bereich der Konusmutter begrenzt. Dadurch ist die Konusmutter gegen Herausziehen aus der Dübelhülse 24 formschlüssig gesichert.

An den Konusbereich der Konusmutter 20 schließt ein dem Bohrlochdurchmesser entsprechender Zylinderteil 58 an. Eine Eindrehung 54 mit einer dem Konus entgegengesetzten Neigung begrenzt auf dem Zylinderteil einen Abstützbereich für die Vorsprünge der Spreizhülse. Die geneigte Fläche der Eindrehung 54 bildet einen Umlenkbereich für das sich elastisch zusammenziehende vordere Lamellenende. Die Eindrehung 54 endet mit der rückwärts gerichteten Anschlagschulter 50.

Um beim Aufstauchen der Lamellen 32 auf der Ringschulter 50 der Konusmutter 20 ein zusätzliches Spreizen oder Auswölben der die Vorsprünge 36 tragenden Lamellenbereiche zu begünstigen, sind gemäß Fig. 3 die vorderen Enden der Lamellen mit einem kurzen Endabschnitt 48 versehen. Dieser kann durch eine oberflächliche Knickschwächungsrille 52 vom Vorsprünge tragenden Lamellenbereich abgeteilt sein, so daß er bei Anlage an der Ringschulter 50 in der Lage ist, sich relativ leicht aufzustellen und eine zusätzliche Spreizung der die Vorsprünge tragenden Lamellenbereiche herbeizuführen. Entsprechend Fig. 3 ist die verlängerte Konusmutter anschließend an den größten Konusdurchmesser mit einem balligen Scheitel 56 versehen, der in die geneigte Umlenkfläche der Eindrehung 54 übergeht.

## Patentansprüche

1. Schwerlastanker zur Befestigung einer Gewindestange oder eines Schraubbolzens in einem Bohrloch einer Bauwerkwand, mit einer über eine vordere Länge längsgeschlitzten Spreizhülse, die in einem Abstand zum vorderen Ende wenigstens einen inneren Vorsprung aufweist, und mit einer von vorn in die Spreizhülse einziehbaren, auf die Gewindestange aufgeschraubten Konusmutter, deren größter Durchmesser etwa dem des Bohrloches entspricht,

   gekennzeichnet durch folgende Merkmale:
   – die Spreizhülse (24) trägt am vorderen Ende über den Hülsenumfang vorstehende äußere Vorsprünge (36) in Form von Zacken oder ringförmigen Erhebungen wie bei einem Gewinde,
   – Konuswinkel und Länge der Konusmutter (12) sind so bemessen, daß bei mit vorbestimmtem Spreizdruck erstmals gesetztem Anker und bei formschlüssig in der Bohrlochwand eingegrabenen Vorsprüngen (36) eine freie Konuslänge als Spreizreserve nach vorn aus der Spreizhülse herausragt,
   – der innere Vorsprung, dessen Abstand vom vorderen Ende der Spreizhülse der Länge der Konusmutter entspricht, ist als nach vorn gerichtete Ringschulter (38) ausgebildet, um Einzugsbewegungen der Konusmutter aufgrund nachträglicher Bohrlocherweiterung bei maximal aufgeweiteter Spreizhülse (24) zu begrenzen.

2. Schwerlastanker nach Anspruch 1, dadurch gekennzeichnet, daß die Spreizhülse (24) an ihrem Außenumfang eine Ausnehmung (28) enthält, die von den vorderen Vorsprüngen (36) ausgeht und sich mindestens über die geschlitzte Länge erstreckt,

3. Schwerlastanker nach Anspruch 1 oder 2, dadurch gekennzeichnet, daß die Länge der Spreizhülse mindestens ungefähr der anderthalbfachen bis zweifachen Konuslänge der Konusmutter entspricht.

4. Schwerlastanker nach einem der vorhergehenden Ansprüche, dadurch gekennzeichnet, daß die Spreizhülse aus einem Drehteil besteht, aus dem zusätzlich zur äußeren Ausnehmung (28) wenigstens eine sich bis zur inneren Ringschulter (38) erstreckende erweiterte Innenbohrung herausgearbeitet sind.

5. Schwerlastanker zur Befestigung einer Gewindestange oder eines Schraubbolzens in einem Bohrloch einer Bauwerkwand, mit einer über eine vordere Länge längsgeschlitzten Spreizhülse und einer von vorn in die Spreizhülse einziehbaren, auf die Gewindestange aufgeschraubten Konusmutter, deren größter Durchmesser etwa dem des Bohrloches entspricht,

   gekennzeichnet durch folgende Merkmale:
   – die Spreizhülse (24) trägt am vorderen Ende über den Hülsenumfang vorstehende äußere Vorsprünge (36) in Form von Zacken oder ringförmigen Erhebungen wie bei einem Gewinde,

– Konuswinkel und Länge der Konusmutter (20) sind so bemessen, daß bei mit vorbestimmtem Spreizdruck erstmals gesetztem Anker und beim formschlüssig in die Bohrlochwand eingegrabenen Vorsprüngen (36) eine verbleibende freie Konuslänge als Spreizreserve nach vorn aus der Spreizhülse herausragt,

– die Konusmutter (20) ist durch einen dem Bohrlochdurchmesser entsprechenden, an das erweiterte Ende des Konus anschließenden Zylinderteil (58) verlängert, auf dem für den Fall von Einzugsbewegungen der Konusmutter aufgrund nachträglicher Bohrlocherweiterungen mittels einer Eindrehung (54) der Ringnut nacheinander ein rückwärtiger Abstützbereich für die Vorsprünge der Spreizhülse, ein bezüglich des Konus entgegengesetzt geneigter Umlenkbereich für das elastisch kontraktierende vordere Ende der Spreizhülse sowie eine radiale Anschlagschulter (50) am vorderen Ende der Eindrehung vorgesehen sind.

6. Schwerlastanker nach Anspruch 5, dadurch gekennzeichnet, daß vor der Ringschulter (50) der Konusmutter ein Abschnitt (54) mit entgegengesetzter Konusneigung und mit balligem Scheitel (56) vorgesehen ist, wobei der Scheitel sich am erweiterten Ende des Konus befindet.

7. Schwerlastanker nach Anspruch 5 oder 6, dadurch gekennzeichnet, daß die Spreizhülse vor den äußeren Vorsprüngen (36) einen kurzen Endabschnitt (48) aufweist, der dem Umlenkbereich auf der Konusmutter zugeordnet ist.

8. Schwerlastanker nach einem der vorhergehenden Ansprüche, dadurch gekennzeichnet, daß die äußeren Vorsprünge am vorderen Ende der Spreizhülse (24) aus zwei oder drei axial hintereinander angeordneten ringförmigen Zacken oder Zackenfolgen bestehen.

9. Schwerlastanker nach einem der vorhergehenden Ansprüche, dadurch gekennzeichnet, daß innerhalb des Abstandes zwischen dem rückwärtigen Ende der Spreizhülse (24) und dem Bohrlocheingang eine einen Längsschlitz enthaltende Hülse (26) mit federndem Aufweiteffekt angeordnet ist.

Fig. 1

Fig. 2

Fig. 3